# EUROPÄISCHE PATENTSCHRIFT

(11) **EP 1 851 460 B1**
(45) Veröffentlichungstag und Bekanntmachung des Hinweises auf die Patenterteilung: **21.01.2009**
(21) Anmeldenummer: 06705895.8
(22) Anmeldetag: 03.02.2006
(51) Int. Cl.: F16D 21/06

(54) **KUPPLUNGSAGGREGAT**
CLUTCH UNIT
UNITE D'EMBRAYAGE

(30) Priorität: 11.02.2005 DE 102005006199
(43) Veröffentlichungstag der Anmeldung: 07.11.2007
(73) Patentinhaber: LuK Lamellen und Kupplungsbau Beteiligungs KG, 77815 Bühl (DE)
(72) Erfinder: SWINFORD-MEYER, Chris, Port Elizabeth Südafrika (ZA); KRISHNASWAMY Suresh, Janagar Bangalore (IN); RADHAKRISHNAN, Padmanaban, 635 001 Tamil Nadu (IN); WEYDMANN, Patrick, 77815 Bühl (DE)
(86) Internationale Anmeldenummer: PCT/DE2006/000166
(87) Internationale Veröffentlichungsnummer: WO 2006/084435

(56) Entgegenhaltungen:
- EP-A- 0 695 885
- US-A- 4 465 170
- US-A- 5 513 734

## Beschreibung

Die Erfindung betrifft ein Kupplungsaggregat mit einem an einem Schwungrad befestigbaren Gehäuse, in welchem zur Bildung einer ersten und einer zweiten Kupplung zwei gegenüber dem Gehäuse drehfeste, jedoch axial verlagerbare Anpressplatten aufgenommen sind, denen jeweils eine Kupplungsscheibe zugeordnet ist, wobei die Kupplungen unabhängig voneinander betätigbar sind mittels am Gehäuse verschwenkbar gelagerten Hebelanordnungen, wobei die Hebelanordnungen jeweils zum Öffnen und Schließen der entsprechenden Kupplung mit einer Anpressplatte gekoppelt ist.

Derartige Kupplungsaggregate, die auch als Doppelkupplung bezeichnet werden, sind beispielsweise durch die US 3,760,918, die US 5,513,734 oder die US 4,465,170 bekannt geworden.

Das Dokument EP0695885 offenbart ein Kupplungsaggregat gemäß dem Oberbegriff des Anspruchs 1.

Derartige Kupplungsaggregate finden unter anderem Verwendung bei Traktoren bzw. Arbeitsmaschinen für die Landwirtschaft. Dabei dient eine der Kupplungen für den Fahrbetrieb und die andere Kupplung zum Zu- und Abschalten eines zusätzlichen Abtriebes, mittels dessen zusätzliche Aggregate antreibbar sind. Derartige Zusatzaggregate können beispielsweise gebildet sein durch Pumpen, Bodenbearbeitungsgeräte, Erntegeräte oder Weiterbearbeitungsgeräte für das geerntete Gut.

Der vorliegenden Erfindung lag die Aufgabe zugrunde, Kupplungsaggregate der eingangs genannten Art zu schaffen, die eine hohe Betriebssicherheit aufweisen, einfach im Aufbau sind und eine platzsparende Bauweise besitzen.

Dies wird gemäß der Erfindung unter anderem bei einem Kupplungsaggregat der eingangs genannten Art dadurch erzielt, dass die erste dem Schwungrad zugewandte Kupplung im nicht betätigten Zustand mittels einer zwischen ihrer Anpressplatte und dem Gehäuse verspannten Tellerfeder geschlossen ist, welche axial zwischen den praktisch einander benachbarten Anpressplatten angeordnet ist, wohingegen die auf der dem Schwungrad abgewandten Seite der ersten Kupplung vorgesehene zweite Kupplung im unbetätigten Zustand geöffnet ist und durch eine auf ihre Hebelanordnung von außen her in das Kupplungsaggregat eingeleitete Kraft zwangsweise geschlossen wird, wobei die Hebelanordnung beider Kupplungen mit der ihr zugeordneten Anpressplatte über axial wirkende Zugelemente gekoppelt ist und zwischen den Zugelementen der zweiten Kupplung und der dieser zugeordneten Anpressplatte wenigstens ein Federelement verspannt ist, das bei geöffneter zweiter Reibungskupplung eine vorbestimmte Vorspannung aufweist und beim Schließen dieser zweiten Kupplung eine zusätzliche, federnde Verformung erfährt, wobei die Hebel beider Hebelanordnungen zweiarmige Hebel bilden, die mit einem radial äußeren Bereich mit den ihnen zugeordneten Zugelementen jeweils über ein Gelenk gekoppelt sind und radial innerhalb dieses Gelenkes am Gehäuse verschwenkbar gelagert sind.

Die axial praktisch benachbarte Anordnung der beiden Anpressplatten ermöglicht eine zumindest axial platz sparende Bauweise, was insbesondere darauf zurückzuführen ist, dass zwischen diesen beiden Anpressplatten lediglich die Tellerfeder angeordnet werden kann. Weiterhin ermöglicht eine derartige Ausgestaltung des Kupplungsaggregates eine axiale Überlagerung von Bereichen der Anpressplatten.

Der vor beschriebene Aufbau des Kupplungsaggregates hat weiterhin den Vorteil, dass die zwangsweise geschlossene Kupplung für den Zusatzantrieb von Nebenaggregaten verwendet werden kann, so dass bei einem Ausfall des die Kupplung zwangsweise schließenden Betätigungssystems die Kupplung selbsttätig öffnen kann. Dadurch kann der Antrieb der Nebenaggregate, von denen einige als Beispiel bereits angeführt wurden, unterbrochen werden. Das mit dem Kupplungsaggregat ausgerüstete Fahrzeug ist jedoch weiterhin fahrbereit. Durch die praktisch automatische Abkuppelung des Nebenabtriebes ist eine hohe Betriebssicherheit gegeben, da der das Kupplungsaggregat antreibende Motor nicht abgeschaltet werden muss.

Das Mindestdrehmoment, welches von der zweiten Kupplung übertragbar ist, wird durch die Vorspannung des wenigstens einen Federelementes bestimmt.

Die radial innen liegenden Hebelbereiche können von einem Betätigungssystem beaufschlagbar sein, welches als hydraulisches, elektrisches oder pneumatisches System ausgelegt sein kann. Die Betätigungssysteme können jedoch auch aus einer Kombination verschiedener Aktorsysteme bestehen, also zum Beispiel elektro-hydraulisch oder elektro-pneumatisch oder hydro-pneumatisch usw. ausgebildet sein.

Das zwischen den Zugelementen und der Anpressplatte der zweiten Kupplung verspannte, wenigstens eine Federelement, kann beispielsweise durch ein tellerfederartiges Bauteil gebildet sein. Ein derartiges Bauteil kann dabei derart ausgelegt werden, dass die von diesem erzeugte Kraft auch über die beim Schließen der zweiten Kupplung erfolgende, zusätzlich federnde Verformung praktisch konstant bleibt. In vorteilhafter Weise können jedoch zur Bildung eines resultierenden Federelementes mehrere Schraubenfedern Verwendung finden, von denen jeweils mindestens eine zwischen jeweils einem Zugelement und der zugeordneten Anpressplatte angeordnet ist. Eine solche vorgespannte Schraubenfeder stützt sich also einerseits an der Anpressplatte und andererseits an einem Zugelement axial ab. Das Federelement bzw. die Schraubenfedern sind dabei auf der den Hebeln der zweiten Kupplung abgekehrten Seite der zugeordneten Anpressplatte angeordnet.

Beim Schließen der zweiten Kupplung werden deren Zugelemente entgegen der Wirkung der Schraubenfedern axial gegenüber der entsprechenden Anpressplatte begrenzt verlagert.

### Für den Aufbau des Kupplungsaggregates kann es besonders vorteilhaft sein, wenn die

Zugelemente der zweiten Kupplung auf der dem verspannten Federelement bzw. den Schraubenfedern abgekehrten Seite der zugeordneten Anpressplatte einen axialen Anschlag tragen, der mit dieser Anpressplatte zusammenwirkt und beim Öffnen der zweiten Reibungskupplung die Entspannung des Federelementes bzw. der Schraubenfedern begrenzt.

Weitere zweckmäßige konstruktive und funktionelle Ausgestaltungsmerkmale eines erfindungsgemäßen Kupplungsaggregates werden in Zusammenhang mit der nun folgenden Figurenbeschreibung näher erläutert.

Dabei zeigt
- Figur 1: eine Draufsicht eines Kupplungsaggregates und
- Figur 2: einen Schnitt gemäß der Linie II-II der Figur 1.

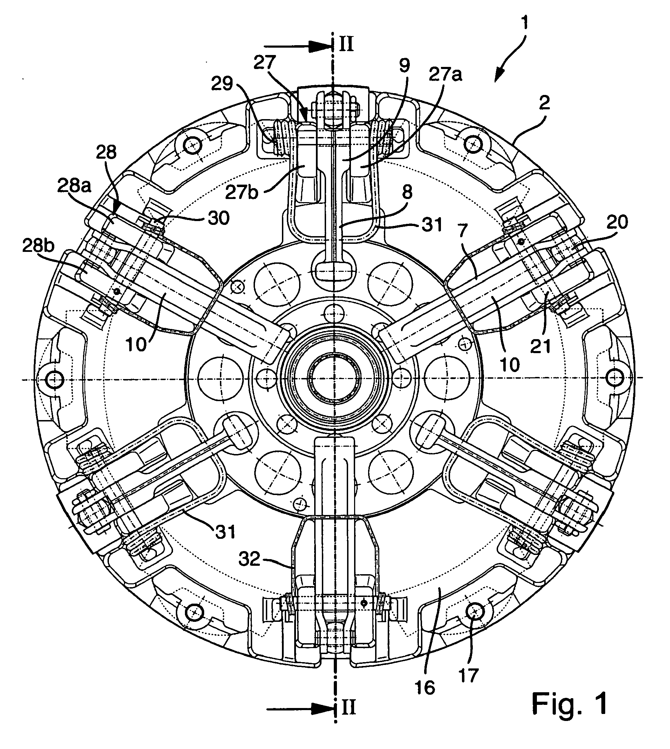

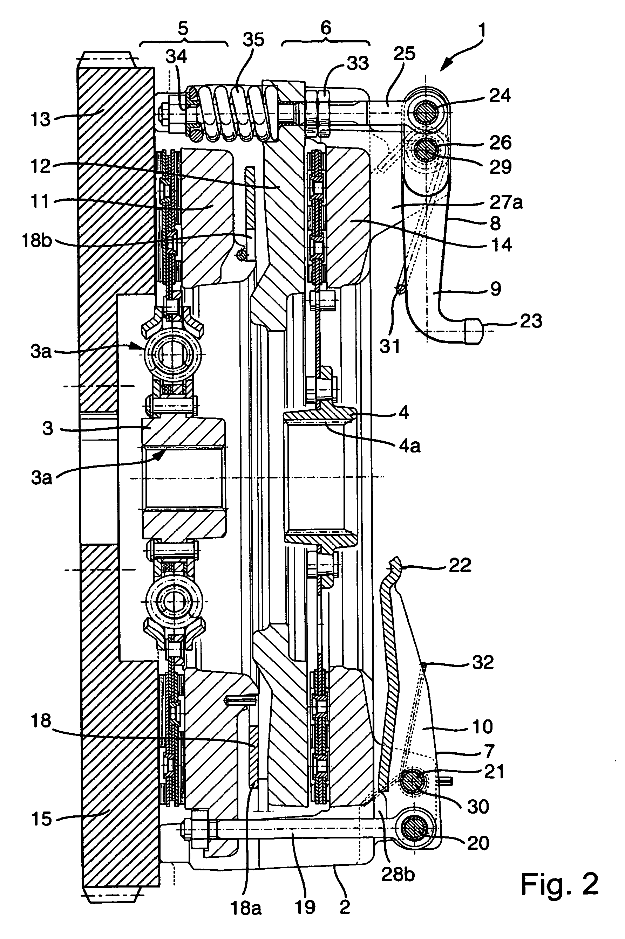

Das in den Figuren 1 und 2 dargestellte Kupplungsaggregat 1 bildet eine so genannte Doppelkupplung 2, welche zwei Kupplungsscheiben 3 und 4 umfasst, die mit unterschiedlichen, anzutreibenden Wellen verbindbar sind, und zwar hier jeweils über eine Nabeninnenverzahnung 3a, 4a. Das Kupplungsaggregat 1 umfasst eine erste Kupplung 5 und eine zweite Kupplung 6, die unabhängig voneinander mittels einer ersten Hebelanordnung 7 und einer zweiten Hebelanordnung 8 betätigbar sind. Wie aus Figur 1 zu entnehmen ist, umfasst bei dem dargestellten Ausführungsbeispiel jede Hebelanordnung 7 und 8 drei Hebel 9 und 10. Die Hebel 10 sind als Blechformteil ausgebildet, wohingegen die Hebel 9 als Schmiede- oder Gussteil ausgebildet sind. Aus Figur 1 ist ersichtlich, dass die Hebel 9 und 10 - in Umfangsrichtung betrachtet - alternierend angeordnet sind.

Wie aus Figur 2 erkennbar ist, besitzen die Kupplungen 5 und 6 jeweils eine Anpressplatte 11 bzw. 12, die gegenüber einer Gegenanpressplatte 13 bzw. 14 mittels der ihnen zugeordneten Hebel 10 bzw. 9 zum Öffnen und Schließen der Kupplungen 5 und 6 axial verlagerbar sind. Durch Verlagerung der Anpressplatten 11 und 12 werden die Reibbeläge der Kupplungsscheiben 3 und 4 entweder entlastet oder aber zur Drehmomentübertragung eingespannt, zwischen den Reibflächen der ihnen jeweils zugeordneten Anpressplatte 11, 12 und Gegenanpressplatte 13, 14. Die beiden Anpressplatten 11 und 12 sind einander axial benachbart.

Bei dem dargestellten Ausführungsbeispiel ist die Gegenanpressplatte 13 der Reibungskupplung 5 durch ein Schwungrad 15 gebildet, das mit der Abtriebswelle eines Motors verbindbar ist. Die Gegendruckplatte 14 ist unmittelbar durch ein Gehäuse 16 gebildet, das mit dem Schwungrad 15 verbindbar ist, und zwar vorzugsweise mittels Verschraubungen. Hierfür besitzt das Gehäuse 16 mehrere über den Umfang verteilte axiale Verschraubungsöffnungen 17, die in Figur 1 erkennbar sind.

Wie aus Figur 2 ersichtlich ist, sind die beiden Anpressplatten 11 und 12 axial im Gehäuse 16 aufgenommen, die Anpressplatte 11 wird durch einen axial zwischen den Anpressplatten angeordneten Energiespeicher in Form einer Tellerfeder 18 in Schließrichtung beaufschlagt. Die Kupplung 5 ist somit im unbetätigten Zustand geschlossen. Hierfür stützt sich die Tellerfeder 18 bei dem dargestellten Ausführungsbeispiel über ihren äußeren Rand 18a am Gehäuse 16 ab und beaufschlagt mit radial inneren Bereichen 18b die Anpressplatte 11 axial in Richtung der Gegenanpressplatte 15. Die axiale Verlagerung der Anpressplatte 11 erfolgt mittels der Hebel 10, die jeweils über ein Zugelement in Form einer Zugstange 19 mit der Anpressplatte 11 in Wirkverbindung stehen. Eine Zugstange 19 hat gegenüber dem zugeordneten Hebel 10 eine Schwenklagerung 20. Radial innerhalb dieser Schwenklagerung 20 ist der Hebel 10 am Gehäuse 16 über eine Schwenklagerung 21 gelagert. Radial innen bilden die Hebel 10 Beaufschlagungsbereiche 22 für ein Betätigungselement, wie beispielsweise ein so genanntes Ausrück- bzw. Betätigungslager. Aufgrund dieser Anordnung bilden diese Hebel 10 jeweils einen so genannten zweiarmigen Hebel, wobei der eine Hebelarm durch den radialen Abstand zwischen den Schwenkachsen der Schwenklagerungen 20 und 21 und der zweite Hebelarm durch die radiale Entfernung der Betätigungsbereiche 22 gegenüber der Achse der Schwenklagerung 21 gebildet sind. Zum öffnen der Reibungskupplung 5 werden die Betätigungsbereiche 22 nach links beaufschlagt, wodurch die Anpressplatte 11 über die Zugstangen 19 in die andere Axialrichtung, also nach rechts gezogen wird.

Wie aus Figur 2 ersichtlich, besitzen die Hebel 9 ebenfalls radial innen jeweils einen Betätigungsbereich 23, radial außen eine Schwenklagerung 24 für ein Zugelement 25 sowie eine radial dazwischen vorgesehene Schwenklagerung 26, die vom Gehäuse 16 getragen wird. Die Hebel 9 bilden also in ähnlicher Weise wie die Hebel 10 so genannte zweiarmige Hebel.

Zur Bildung der Schwenklagerungen 21 und 26 trägt das Gehäuse 16 so genannte Lagerböcke 27, 28, die in Figur 1 erkennbar sind. Bei dem dargestellten Ausführungsbeispiel sind die Lagerböcke 27, 28 jeweils durch zwei axial hervorstehende Gehäusewangen bzw. Gehäusenocken 27a, 27b bzw. 28a, 28b gebildet, die parallel zueinander beabstandet sind und zwischen sich jeweils einen Hebel 9 bzw. 10 aufnehmen. Die Lagernocken 27a, 27b, 28a, 28b und die entsprechend zugeordneten Hebel 9 und 10 besitzen Ausnehmungen zur Aufnahme einer Verschwenkachse 29 bzw. 30.

Zwischen den Hebeln 9, 10 und dem Gehäuse 16 sind Schenkelfedern bzw. Federbügel 31, 32 verspannt, welche die Hebel 9,10 in Richtung einer definierten Lage drängen.

Die ebenfalls durch Zugstangen gebildeten Zugelemente 25 tragen einen axialen Anschlag 33, der hier durch zwei einstellbare Muttern gebildet ist. Der Anschlag 33 befindet sich auf der der Gegenanpressplatte 14 zugewandten Seite der Anpressplatte 12. Auf der dem Anschlag 33 abgewandten Seite der Anpressplatte 12 tragen die Zugelemente 25 einen zweiten Anschlag bzw. eine Abstützung 34, welcher bei dem dargestellten Ausführungsbeispiel ebenfalls eine Mutter umfasst. Zwischen einem zweiten Anschlag 34 und der Anpressplatte 12 ist ein Energiespeicher, der hier jeweils durch mindestens eine Schraubenfeder 35 gebildet ist, verspannt. Die zweite Kupplung 6 ist aufgrund ihres kinematischen Aufbaus bei unbetätigten Hebeln 9 geöffnet. Das bedeutet also, dass diese zweite Kupplung 6 durch eine über die Betätigungsbereiche 23 in die Kupplung 6 eingeleitete Kraft zwangsweise geschlossen wird. Im geöffneten Zustand der zweiten Kupplung 6 wird die auf einen bestimmten Wert eingestellte Vorspannkraft der Federn 35 über die Anschläge 33 abgestützt, wodurch die in Figur 2 dargestellte, definierte Lage zwischen den einzelnen Bauteilen der zweiten Kupplung 6 gewährleistet wird. Zum Schließen der zweiten Kupplung 6 werden die Betätigungsbereiche 23 nach links beaufschlagt, wodurch die Hebel 9 um die Verschwenklagerungen 26 verschwenkt werden, so dass über die Zugstangen 25 die Anpressplatte 12 nach rechts gezogen wird. Sobald die Reibbeläge der Kupplungsscheibe 4 zwischen den Reibflächen der Anpressplatte 12 und Gegenanpressplatte 14 verspannt werden und die Betätigungsbereiche 23 weiterhin um einen bestimmten Betrag nach links verlagert werden, werden auch die Schraubenfedern 35 zwischen dem zweiten Anschlag 34 und der Anpressplatte 12 verspannt. Dies ist darauf zurückzuführen, dass die Zugstangen 25 durch die Hebel 9 nach rechts gezogen werden. Die Schließkraft der zweiten Kupplung 6 wird also durch die Vorspannung und die zusätzlich beim Schließen der Kupplung 6 bewirkte weitere, verhältnismäßig geringe Komprimierung der Federn 35 bestimmt.

Das Kupplungsaggregat 1 ist derart aufgebaut, dass die erste Kupplung 5 die so genannte Fahrkupplung bildet, mittels der das entsprechende Fahrzeug bewegt wird. Die erste Kupplung 5 dient also zur Schaltung der Gänge des Fahrgetriebes. Aus Figur 2 ist ersichtlich, dass die Kupplungsscheibe 3 zumindest einen Drehschwingungsdämpfer 3a besitzt.

Die zweite Kupplung 6 dient beispielsweise bei Traktoren oder Vielzweckfahrzeugen für den Antrieb von Nebenaggregaten, wie zum Beispiel Pumpen, Ernte- und/oder Bodenbearbeitungsgeräten usw. Die Kupplungsscheibe 4 ist bei dem dargestellten Ausführungsbeispiel als so genannte starre Kupplungsscheibe, also ohne Dämpfer ausgebildet.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Kupplungsaggregat
- 2: Doppelkupplung
- 3: Kupplungsscheibe
- 3a: Nabeninnenverzahnung
- 4: Kupplungsscheibe
- 4a: Nabeninnenverzahnung
- 5: erste Kupplung
- 6: zweite Kupplung
- 7: erste Hebelanordnung
- 8: zweite Hebelanordnung
- 9: Hebel
- 10: Hebel
- 11: Anpressplatte
- 12: Anpressplatte
- 13: Gegenanpressplatte
- 14: Gegenanpressplatte
- 15: Schwungrad
- 16: Gehäuse
- 17: axiale Verschraubungsöffnungen
- 18: Tellerfeder
- 19: Zugstange
- 20: Schwenklagerung
- 21: Schwenklagerung
- 22: Betätigungsbereich
- 23: Betätigungsbereich
- 24: Schwenklagerung
- 25: Zugelement
- 26: Schwenklagerung
- 27: Lagerböcke
- 27a: hervorstehende Gehäusewangen
- 27b: hervorstehende Gehäusewangen
- 28: Lagerböcke
- 28a: hervorstehende Gehäusewangen
- 28b: hervorstehende Gehäusewangen
- 29: Verschwenkachse
- 30: Verschwenkachse
- 31: Federbügel
- 32: Federbügel
- 33: axialer Anschlag
- 34: zweiter Anschlag bzw. Abstützung
- 35: Schraubenfeder

## Patentansprüche

1. Kupplungsaggregat mit einem an einem Schwungrad befestigbaren Gehäuse, in welchem zur Bildung einer ersten und einer zweiten Kupplung zwei gegenüber dem Gehäuse drehfeste, jedoch axial verlagerbare Anpressplatten aufgenommen sind, denen jeweils eine Kupplungsscheibe zugeordnet ist, wobei die Kupplungen unabhängig voneinander betätigbar sind mittels am Gehäuse verschwenkbar gelagerten Hebelanordnungen, wobei jeweils eine Hebelanordnung zum Öffnen und Schließen der entsprechenden Kupplung mit einer Anpressplatte gekoppelt ist, **dadurch gekennzeichnet, dass** die erste dem Schwungrad (15) zugewandte Kupplung (5) im nicht betätigten Zustand mittels einer zwischen ihrer Anpressplatte und dem Gehäuse verspannten Tellerfeder (18) geschlossen ist, die axial zwischen den einander benachbarten Anpressplatten (11, 12) angeordnet ist, wohingegen die auf der dem Schwungrad abgewandten Seite der ersten Kupplung (5) vorgesehene zweite Kupplung (6) im unbetätigten Zustand geöffnet ist und durch eine auf ihre Hebelanordnung (8) eingeleitete Kraft zwangsweise geschlossen wird, wobei die Hebelanordnung (7, 8) beider Kupplungen (5, 6) mit der ihr zugeordneten Anpressplatte (11, 12) über axial wirkende Zugelemente (19, 25) gekoppelt ist und zwischen den Zugelementen der zweiten Kupplung (6) und der dieser zugeordneten Anpressplatte (12) wenigstens ein Federelement (35) verspannt ist, das bei geöffneter zweiter Reibungskupplung (6) eine vorbestimmte Vorspannung aufweist und beim Schließen der zweiten Kupplung (6) eine zusätzliche federnde Verformung erfährt, wobei die Hebel (9,10) beider Hebelanordnungen (8, 7) zweiarmige Hebel bilden, die mit einem radial äußeren Bereich mit den ihnen zugeordneten Zugelementen (19, 25) jeweils über ein Gelenk (20, 24) gekoppelt sind und radial innerhalb dieses Gelenkes am Gehäuse (16) verschwenkbar gelagert sind.

2. Kupplungsaggregat nach Anspruch 1, **dadurch gekennzeichnet, dass** zwischen den Zugelementen und der Anpressplatte der zweiten Kupplung (6) Schraubenfedern (35) verspannt sind, die sich jeweils einerseits an der Anpressplatte (12) und andererseits an einem Zugelement (25) axial abstützen, wobei die Schraubenfedern auf der den Hebeln (9) abgekehrten Seite der Anpressplatte (12) angeordnet sind.

3. Kupplungsaggregat nach wenigstens einem der vorhergehenden Ansprüche, **dadurch gekennzeichnet, dass** die Zugelemente (25) der zweiten Kupplung (6) beim Schließen derselben entgegen der Wirkung der Schraubenfedern (35) axial gegenüber der zugeordneten Anpressplatte (12) begrenzt verlagerbar sind.

4. Kupplungsaggregat nach wenigstens einem der vorhergehenden Ansprüche, **dadurch gekennzeichnet, dass** die Zugelemente (25) der zweiten Kupplung (6) auf der den Schraubenfedern (35) abgekehrten Seite der von ihnen betätigten Anpressplatte (12) einen axialen Anschlag (33) tragen, der mit dieser Anpressplatte zusammenwirkt und beim Öffnen der zweiten Reibungskupplung (6) die Entspannung der auf die Zugelemente (25) einwirkenden Schraubenfedern (35) begrenzt.

5. Kupplungsaggregat nach wenigstens einem der vorhergehenden Ansprüche, **dadurch gekennzeichnet, dass** die dem Schwungrad (15) benachbarte erste Kupplung (5) eine Fahrkupplung zum Schalten eines Getriebes bildet und die zweite Kupplung (6) als Antrieb für Zusatzaggregate dient.

## Claims

1. Clutch assembly having a housing which can be fastened to a flywheel and in which two pressure plates are received for forming a first and a second clutch, which pressure plates are rotationally fixed with respect to the housing but can be displaced axially and are assigned in each case one clutch plate, it being possible for the clutches to be actuated independently of one another by means of lever arrangements which are mounted pivotably on the housing, in each case one lever arrangement being coupled to a pressure plate for opening and closing the corresponding clutch, **characterized in that**, in the non-actuated state, the first clutch (5) which faces the flywheel (15) is closed by means of a disc spring (18) which is clamped between its pressure plate and the housing and is arranged axially between the mutually adjacent pressure plates (11, 12), whereas, in the non-actuated state, the second clutch (6) which is provided on that side of the first clutch (5) which faces away from the flywheel is open and is positively closed by a force which is introduced onto its lever arrangement (8), the lever arrangement (7, 8) of both clutches (5, 6) being coupled via axially acting pulling elements (19, 25) to the pressure plate (11, 12) which is assigned to it, and at least one spring element (35) being clamped between the pulling elements of the second clutch (6) and the pressure plate (12) which is assigned to the latter, which spring element (35) has a predefined prestress when the second friction clutch (6) is open and experiences an additional resilient deformation when the second clutch (6) is closed, the levers (9, 10) of both lever arrangements (8, 7) forming two-armed levers which are coupled by way of a radially outer region in each case via a joint (20, 24) to the pulling elements (19, 25), which are assigned to them, and are mounted such that they can be pivoted radially within said joint on the housing (16).

2. Clutch assembly according to Claim 1, **characterized in that** helical springs (35) which are supported axially in each case at one end on the pressure plate (12) and at the other end on a pulling element (25) are clamped between the pulling elements and the pressure plate of the second clutch (6), the helical springs being arranged on that side of the pressure plate (12) which faces away from the levers (9).

3. Clutch assembly according to at least one of the preceding claims, **characterized in that** the pulling elements (25) of the second clutch (6) can be displaced to a limited extent axially with respect to the associated pressure plate (12) counter to the action of the helical springs (35) when said second clutch (6) is closed.

4. Clutch assembly according to at least one of the preceding claims, **characterized in that**, on that side of the pressure plate (12) which is actuated by them, which side faces away from the helical springs (35), the pulling elements (25) of the second clutch (6) carry an axial stop (33) which interacts with said pressure plate and, when the second friction clutch (6) is open, limits the relaxation of the helical springs (35) which act on the pulling elements (25).

5. Clutch assembly according to at least one of the preceding claims, **characterized in that** the first clutch (5) which adjoins the flywheel (15) forms a driving clutch for shifting a transmission, and the second clutch (6) serves as drive for additional assemblies.

## Revendications

1. Unité d'embrayage avec un carter pouvant être fixé à un volant, dans lequel sont logées deux plaques de serrage fixes par rapport au carter mais mobiles dans le plan axial pour former un premier et un second embrayage, lesdites plaques étant respectivement associées à un disque d'embrayage, les embrayages pouvant être actionnés indépendamment l'un de l'autre à l'aide d'agencements de levier disposés de façon pivotante au niveau du carter, un agencement de levier étant respectivement couplé à une plaque de serrage pour ouvrir et fermer l'embrayage correspondant, **caractérisée en ce que** le premier embrayage (5) orienté vers le volant (15) est fermé à l'état non actionné à l'aide d'un ressort diaphragme (18) contraint entre sa plaque de serrage et le carter, ledit ressort étant disposé dans le plan axial entre les plaques de serrage (11, 12) connexes, alors que le second embrayage (6) prévu sur côté du premier embrayage (5) opposé au volant est ouvert à l'état non actionné et fermé de force par une force amenée sur son agencement de levier (8), l'agencement de levier (7, 8) des deux embrayages (5, 6) étant couplé avec la plaque de serrage (11, 12) lui étant associée par l'intermédiaire d'éléments de traction (19, 25) à action axiale et au moins un élément de ressort (35) étant contraint entre les éléments de traction du second embrayage (6) et de la plaque de serrage (12) lui étant associée, ledit élément de ressort présentant en présence du second embrayage à friction (6) ouvert une précontrainte prédéfinie et subissant lors de la fermeture du second embrayage (6) une déformation élastique supplémentaire, les leviers (9, 10) des deux agencements de levier (8, 7) formant des leviers à deux bras couplés à une zone extérieure dans le plan radial avec les éléments de traction (19, 25) lui étant associés par l'intermédiaire, respectivement, d'une articulation (20, 24) et étant disposés de façon pivotante au niveau du carter (16) dans le plan radial à l'intérieur de cette articulation.

2. Unité d'embrayage selon la revendication 1, **caractérisée en ce que** des ressorts à vis (35) sont contraints entre les éléments de traction et la plaque de serrage du second embrayage (6) qui s'appuient respectivement dans le plan axial d'une part contre la plaque de serrage (12) et d'autre part contre un élément de traction (25), les ressorts à vis étant disposés sur le côté de la plaque de serrage (12) opposé aux leviers (9).

3. Unité d'embrayage selon au moins l'une quelconque des revendications précédentes, **caractérisée en ce que** les éléments de traction (25) du second embrayage (6) peuvent être déplacés de façon limitée en cas de fermeture de ceux-ci en allant à l'encontre de l'effet des ressorts à vis (35) dans le plan axial par rapport à la plaque de serrage (12) associée.

4. Unité d'embrayage selon au moins l'une quelconque des revendications précédentes, **caractérisée en ce que** les éléments de traction (25) du second embrayage (6) supportent sur le côté opposé des ressorts à vis (35) de la plaque de serrage (12) actionnée par eux une butée axiale (33) qui interagit avec cette plaque de serrage et limite en cas d'ouverture du second embrayage à friction (6) la détente des ressorts à vis (35) agissant sur les éléments de traction (25).

5. Unité d'embrayage selon au moins l'une quelconque des revendications précédentes, **caractérisée en ce que** le premier embrayage (5) connexe au volant (15) forme un embrayage de conduite servant à passer les vitesses d'une boîte de vitesses et le second embrayage (6) sert d'entraînement pour les unités supplémentaires.
